# NEW EUROPEAN PATENT SPECIFICATION

(11) **EP 2 267 348 B2**
(45) Date of publication and mention of the opposition decision: **29.07.2015**
(45) Mention of the grant of the patent: 22.08.2012
(21) Application number: 10167069.3
(22) Date of filing: 23.06.2010
(51) Int. Cl.: F16K 31/40

(54) **A normally open solenoid valve and an assembling method thereof**
Normal geöffnetes Magnetventil und Herstellungsverfahren dafür
Vanne à solénoïde normalement ouverte et son procédé d'assemblage

(30) Priority: 26.06.2009 CN 200910149820; 26.06.2009 CN 200910149819
(43) Date of publication of application: 29.12.2010
(73) Proprietor: Zhejiang Sanhua Climate & Appliance Controls Group Co., Ltd., Zhejiang 312500 (CN)
(72) Inventor: Chen, Bin, Zhejiang Province 312500 (CN)
(74) Representative: Von Kreisler Selting Werner - Partnerschaft von Patentanwälten und Rechtsanwälten mbB

(56) References cited:
- WO-A1-2009/049625
- CN-Y- 2 619 099
- CN-Y- 2 731 203
- DE-A1- 2 740 646
- US-A- 1 167 815
- US-A- 3 829 060
- US-A- 4 783 044
- US-A- 4 880 205
- Technical Broschüre "Danfoss Magnetventile", Typ EVR2-40 NC/NO, 04-2006
- General information of company ODE S.r.i.

## Description

### FIELD OF THE INVENTION

The present invention relates to refrigeration control field, especially to a control of pipelines in a refrigeration system such as refrigeration equipment and commercial air conditioner, more specifically, to a solenoid valve which remains closed when being energized and an assembling method thereof.

### DESCRIPTION OF THE RELATED ART

A solenoid valves for controlling the opening/closing of pipelines is widely used in a circuit of a refrigeration system. Solenoid valves are mostly opened when being energized. However, it is necessary to adopt a solenoid valve which remains closed when being energized (hereinafter also referred to as "normally open solenoid valve") in some pipelines in order to save energy. In the prior art, there are generally two kinds of normally open solenoid valves. One kind of normally open solenoid valve may provide a relatively small flowrate, as disclosed in Chinese Utility Model No. CN2619099Y, titled "Normally open DC electromagnetic valve with throtting and voltage reducing", which employs a directly open/closed operating mode. The other kind of normally open solenoid valve may provide a relatively large flowrate, as disclosed in Chinese Utility Model No. CN2731203Y, titled "Silencing vibration-damping fore-runner normal open type solenoid valve", which employs a pilot-operated mode, i.e., an indirectly open/closed operating mode.

Both of the solenoid valves mentioned above include a solenoid coil component and a valve body component. The valve body component is provided with a valve port therein. A seal component is provided opposite to the valve port. The opening and closing of the solenoid valve are realized by cooperation between the valve port and the seal component. A fixed iron core component is fixedly provided near the side of the seal component, and a movable iron core component is provided near the end of the fixed iron core component far from the seal component. The seal component is fixedly provided on a transmission rod which is inserted through the fixed iron core component and fixedly connected to the movable iron core component. When the solenoid coil component is energized, the movable iron core component is moved towards the fixed iron core component under the electromagnetic force, so as to drive the seal component to move towards the valve port and thus close the solenoid valve. When the solenoid coil component is de-energized, the movable iron core component is moved away from the fixed iron core component under the return force of the spring, so as to drive the seal component to move away from the valve port and thus open the solenoid valve.

However, in above solenoid valves, since the seal component is fixedly connected to the movable iron core component and the movable iron core component and the seal component are located at both sides of the fixed iron core component, respectively, the engagement and/or disengagement operations between the seal component and the valve port can be realized by the transmission action of the transmission rod fixed to the movable iron core component. Obviously, the assembly chain of such structural design involves a lot of correlative factors. Therefore, the prior structural design has problems such as a higher requirement on assembly precision and a more complexity in assembly process. The prior art is represented by US 4,783,044 B1 and WO 2009/049625 A1.

### SUMMARY OF THE INVENTION

In view of the above disadvantages, the technical problem of the invention to be solved is to provide a normally open solenoid valve which can simplify the assembling process and reduce assembly cost by optimizing the structure design. The present invention further provides an assembling method for the solenoid valve.

A normally open solenoid valve according to the present invention includes the features defined in claim 1.

Preferably, the return spring is provided between the fixed iron core component and the transmission component.

According to the invention, the seal component is axially movable relative to the lower end of the transmission component, and an elastic component is provided between the seal component and the transmission component.

Preferably, the elastic component is a seal spring, and a spring force of the seal spring is smaller than that of the return spring when the solenoid valve is energized to close.

Preferably, the spring force of the seal spring is between 1/10 and 1/3 of the spring force of the return spring when the solenoid valve is energized to close.

According to the invention, the transmission component includes a transmission sleeve, and a stop fixed component is fixedly provided at the lower end of the fixed iron core component, and wherein an outer circumferential surface of the transmission sleeve is of a step shape in which an upper portion of the step shape is large while a lower portion thereof is small, the transmission sleeve is provided in a receiving chamber of the fixed iron core component, a small diameter lower portion of the transmission sleeve is inserted into a through hole of the stop fixed component, the return spring is provided between a step surface of the transmission sleeve and the stop fixed component, and the seal component is provided in the lower portion the transmission sleeve. An upper end portion of the transmission component contacts with the movable iron core component. The movable iron core component drives the transmission component to move towards the valve port when the coil component is energized, and the transmission component drives the movable iron core component to move away from the valve port when the solenoid coil component is de-energized.

Preferably, the transmission component further includes a transmission seat and a transmission rod, the transmission seat abuts against the transmission sleeve and is disposed in an upper end portion of the transmission sleeve, an upper end portion of the transmission rod contacts with the movable iron core component and a lower end portion of the transmission rod abuts against an upper end portion of the transmission seat through a through hole of the fixed iron core component, and the elastic component is provided between the transmission seat and the seal component.

Preferably, an inner circumferential surface of the transmission sleeve is of a step shape in which an upper portion of the step shape is large while a lower portion thereof is small, the transmission seat is of a step shape in which an upper portion of the step shape is large while a lower portion thereof is small, the transmission seat is wholly or partially provided in a chamber of the transmission sleeve, and a bottom surface of a large diameter upper portion of the transmission seat abuts against a step surface of the chamber of the transmission sleeve.

Preferably, the transmission rod and the transmission seat are integrated as a single piece. For example, the transmission rod and the transmission seat are machined integratedly, or machined separately and then fixed as a single piece.

Preferably, there are gaps between an upper surface of the transmission seat, an upper surface of the transmission sleeve and a positioning surface at the bottom of the receiving chamber of the fixed iron core component, respectively, when the solenoid valve is de-energized.

Preferably, the gaps are ranged from 0.05mm to 1mm.

Preferably, the valve port is a pilot valve port of a diaphragm component.

Preferably, the valve port is a pilot valve port of a piston component.

An assembling method for the normally open solenoid valve according to the present invention includes the steps of assembling the seal component and the fixed iron core component to form the fixed iron core assembly; fitting and fixing the fixed iron core assembly and the sleeve together; assembling the movable iron core component until forming the valve body component; and assembling the valve body component and the coil component together.

Compared with the prior art, after assembling, the seal component and the fixed iron core component of the normally open solenoid valve according to the present invention are integrated as a single piece. The seal component can by driven by the transmission component to axially slide relative to the fixed iron core component, which can effectively improve the guidance performance for displacement of the seal component, and thus improve the operation reliability of the solenoid valve. During assembling, a special assembling process for integratedly fixing the seal component to the movable iron core component is unnecessary, which makes the whole assembling more convenient and decreases the difficulty in machining. Moreover, when flowrate of the solenoid valve is different and adjusting the opening degree (i.e. gap) of the solenoid valve is required, it only needs to adjust the gap (i.e. displacement) between the movable iron core component and the fixed iron core assembly. In this way, a standardization design of the fixed iron core assembly may be realized so as to reduce the controlling steps during assembling, which substantially reduces the errors in assembling.

In the preferable embodiment according to the present invention, an elastic element is disposed between the seal component and the transmission component. With such configuration, after the fixed iron core assembly and the movable iron core component are attracted each other, the seal component is pushed by the valve port or the pilot valve port to compress the elastic element, thereby achieving a balance. Therefore, it is advantageous to improve the internal leakage when the solenoid valve is closed.

### BRIEF DESCRIPTION of the DRAWINGS

Figure 1 is a schematic view of a normally open solenoid valve according to a first example;
Figure 2 is a schematic view of the fixed iron core assembly shown in Figure 1;
Figure 3 is a schematic view of the transmission sleeve of the fixed iron core assembly shown in Figure 2;
Figure 4 is a schematic view showing the solenoid valve of the first example when being de-energized under a pressure difference;
Figure 5 is a schematic view showing the solenoid valve of the first example when being energized;
Figure 6 is a schematic view of the fixed iron core assembly according to a second example;
Figure 7 is a schematic view of the fixed iron core assembly according to a third example;
Figure 8 is a schematic view of the normally open solenoid valve according to the third example;
Figure 9 is an enlarged view of the I portion in figure 8;
Figure 10 is a schematic view of the fixed iron core assembly according to a fourth example;
Figure 11 is a schematic view of the fixed iron core assembly according to a fifth example;
Figure 12 is a schematic view of the normally open solenoid valve according to the fifth example;
Figure 13 is a schematic view of the fixed iron core assembly according to a sixth example; and
Figure 14 is a schematic view of the normally open solenoid valve according to a seventh example.

### DETAILED DESCRIPTION

The present invention may be applied to a normally open solenoid valve, such as a solenoid valve which is closed directly when being energized, or a solenoid valve which is closed indirectly by a pilot-operated means when being energized. The directly open/closed configuration is commonly used in a state that the desired flowrate of the solenoid valve is relatively small, while the pilot-operated indirectly open/closed configuration is used in a state that the desired flowrate of the solenoid valve is relatively large. Comparing the two configurations, the pilot-operated indirectly open/closed configuration is more complex, but the operating principles of both configurations are the same. Therefore, the following description will be made by way of the pilot-operated indirectly open/closed solenoid valve.

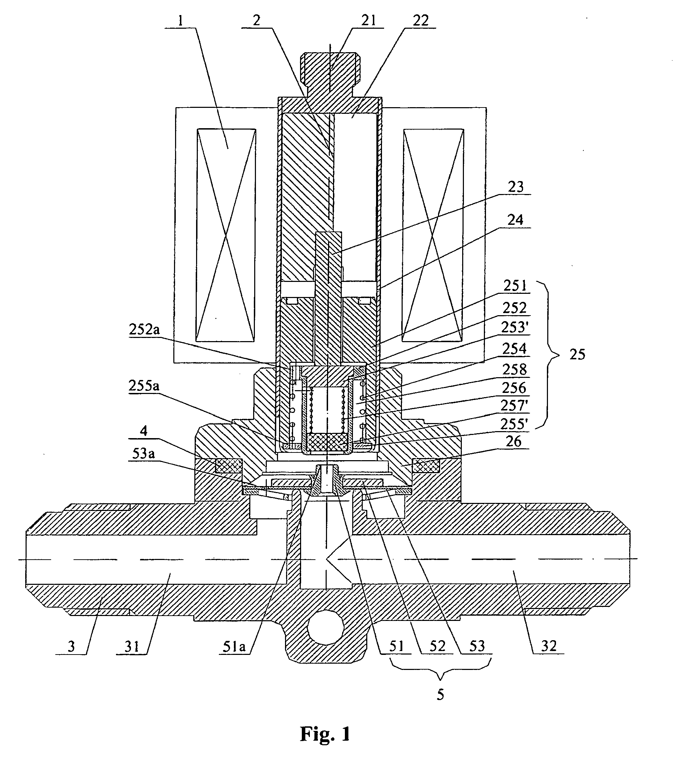

Referring to Fig. 1, an example of a normally open solenoid valve is shown.

As shown in Fig. 1, the pilot-operated normally open solenoid valve includes a valve body component 2, a valve body 3, and a solenoid coil component 1. The valve body component 2 includes a sleeve 24 and a plug 21. The sleeve 24 is hermetically fixed to a valve seat 26 by welding. One end of the sleeve 24 is blocked with the plug 21. A movable iron core component 22 is disposed in the end portion of the sleeve 24 adjacent to the plug 21, and can slide axially under the electromagnetic force. A fixed iron core assembly 25 is fixedly disposed in the other end portion of the sleeve 24 opposite to the plug 21. A fixed iron core component 251 of the fixed iron core assembly 25 is hermetically fixed to the sleeve 24 by welding, or is fixed to the sleeve 24 by rolling and then sealed by welding. The valve body 3 is disposed at the end of the valve body component 2 opposite to the plug 21. The valve body 3 is hermetically connected with the valve body component 2, and the seal therebetween is achieved by a sealing gasket 4 in this example. A valve port for opening/closing the seal is provided in the valve body 3. In this example, the seal is achieved through the contact between a diaphragm 53 of a diaphragm component 5 and the valve port. The diaphragm component 5 is further provided with a pilot valve spool 51 and a stop plate 52. The pilot valve spool 51 is provided with a pilot valve port 51a being hermetically contacted with a seal component 257'. Because the configuration of this portion of the valve body is not the inventive point of the present invention, detailed description thereof is omitted.

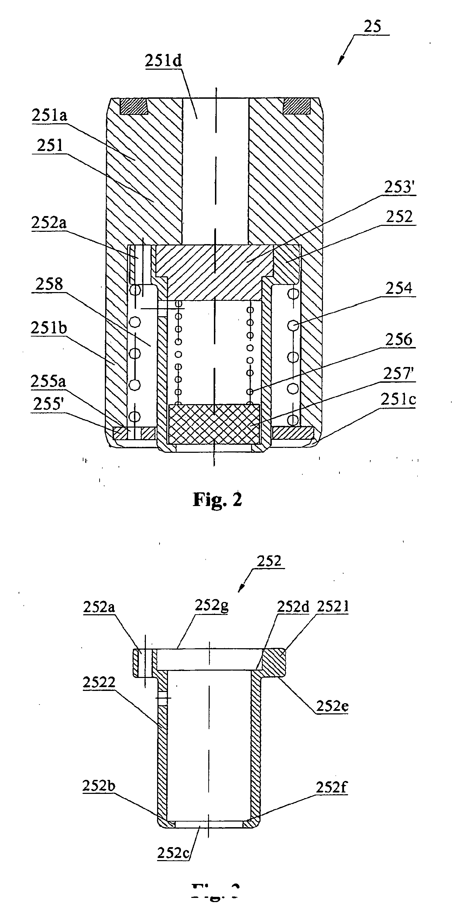

With reference to Figs. 2 and 3, Fig. 2 is a schematic view of the fixed iron core assembly shown in Fig. 1, and Fig. 3 is a schematic view of the transmission sleeve of the fixed iron core assembly shown in Fig. 2.

The fixed iron core assembly 25 includes a fixed iron core component 251. The upper end portion 251a of the fixed iron core component 251 adjacent to the movable iron core component is provided with a though hole 251d, and a lower end portion 251b of the fixed iron core component 251 far from the movable iron core component is provided with a receiving chamber 258. The inner diameter of the receiving chamber 258 is larger than that of the through hole 251d so as to form a positioning surface 2511. The lowest end of the fixed iron core component 251 is a thin wall portion 251c. A fixed component 255' is fixed in the receiving chamber 258. The fixed component 255' and the fixed iron core component 251 are fixed together by pressing and deforming the end of the thin wall portion 251c of the fixed iron core component 251. In this example, a transmission sleeve 252 is further provided in the receiving chamber 258. Because the transmission sleeve 252 is located in the receiving chamber 258 and the seal component 257' is axially movably located in the transmission sleeve 252, the seal component 257' is also located in the receiving chamber 258. In addition, the example is not limited to this configuration. For example, one end of the transmission sleeve 252 can protrude from the receiving chamber 258, that is, a portion of the transmission sleeve is located within the receiving chamber, and the other portion thereof protrudes from the receiving chamber. Besides, the seal component fixed in the transmission sleeve may also have a portion located within the receiving chamber and the other portion protruding from the receiving chamber of the fixed iron core component. Accordingly, the solenoid valve may be shortened in height direction and thus is more reasonable.

An upper portion 2521 of the transmission sleeve 252 has an upper planar surface 252g. The outer diameter of the upper portion 2521 is larger than that of a middle portion 2522, thereby forming a second positioning surface 252e for positioning a return spring. The inner diameter of the hole in the upper portion 2521 is larger than that of the middle portion 2522, thereby forming a first positioning surface 252d for positioning a transmission seat 253'. A bottom portion 252b of the transmission sleeve 252 is provided with a hole 252c. The inner diameter of the hole 252c is smaller than that of the middle portion 2522, thereby forming a third positioning surface 252f for positioning the seal component. The seal component 257' contacts with the valve port to realize opening/closing operation through the hole 252c. A return spring 254 is disposed between the transmission sleeve 252 and the fixed component 255'. One end of the return spring 254 abuts against the second positioning surface 252e of the transmission sleeve 252, and the other end thereof abuts against the planar surface of the fixed component 255'. In this way, when the solenoid valve is energized, the upper end portion of the fixed iron core component 251, the movable iron core component 22 and the solenoid coil component 1 outside the sleeve form a magnetic circuit, but the return spring 254 located in the receiving chamber 258 at the lower end portion of the fixed iron core component 251 is not included in the magnetic circuit. Such a design can increase electromagnetic attractive force of the solenoid valve, and can facilitate to the stability of the return spring. Moreover, the transmission seat 253' is provided in the transmission sleeve 252, and an elastic component, which is a seal spring 256 in this example, is provided between the transmission seat 253' and the seal component 257'. When the solenoid valve is energized to be closed, the spring force of the seal spring 256 is smaller than that of the return spring 254 at this time. More preferably, the spring force of the seal spring 256 is about 1/10 to 1/3 of the spring force of the return spring 254 at this time. Further, one end of a transmission rod 23 as a portion of a transmission component passes through the through hole 251d in the upper end portion of the fixed iron core component 251 and contacts with the movable iron core component 22, and the other end thereof abuts against the transmission seat 253'. The transmission rod 23, the transmission seat 253' and the transmission sleeve 252 are components constituting the transmission component. To maintain a pressure balance between the inside and outside of the receiving chamber 258, a balance hole 255a may be further disposed in the fixed component 255'. In the same way, to maintain a pressure balance between the receiving chamber and the spaces between the fixed iron core component and the movable iron core component, a transmission sleeve balance hole 252a is also disposed in the transmission sleeve 252. Furthermore, in the case that the solenoid valve is de-energized, a certain gap, for example, from 0.05 mm to 1.0 mm, exists between the upper planar surface 252g of the transmission sleeve 252, an upper planar surface of the transmission seat 253' and the positioning surface 2511 of the receiving chamber of the fixed iron core component 251, thereby remaining a pressure balance inside the solenoid valve. More preferably, the gap may be ranged from 0.15 mm to 0.5 mm. In this way, a pressure balancing passage is formed inside the solenoid valve, thereby maintaining a pressure balance inside the whole valve. Moreover, the upper planar surface 252g of the transmission sleeve 252 and the upper planar surface of the transmission seat 253' are not necessarily flushed with each other, but may have a height difference, for example, about 0.25 mm or less.

In the solenoid valve, the fixed iron core component 251 and the fixed component 255' are fixed parts being immovable axially. The transmission seat 253', the transmission sleeve 252, the seal component 257' and the seal spring 256 which are fixed in the fixed iron core component 251 are movable parts being movable axially in the fixed iron core assembly, and these movable parts move with the movement of the movable iron core component and the transmission rod. The return spring is disposed between the movable parts being movable axially and the fixed parts being immovable axially in the fixed iron core assembly to provide a return force for the movable parts.

Basically, the operating principle and operating condition of the normally open solenoid valve described above are as follows:

First, when the solenoid coil component is de-energized, the spring force of the return spring 254 is transmitted to the transmission rod 23 through the transmission sleeve 252, so as to push the movable iron core component 22 to move close to the plug 21, so that the movable iron core component 22 and the fixed iron core component 251 are separated in a separated state.

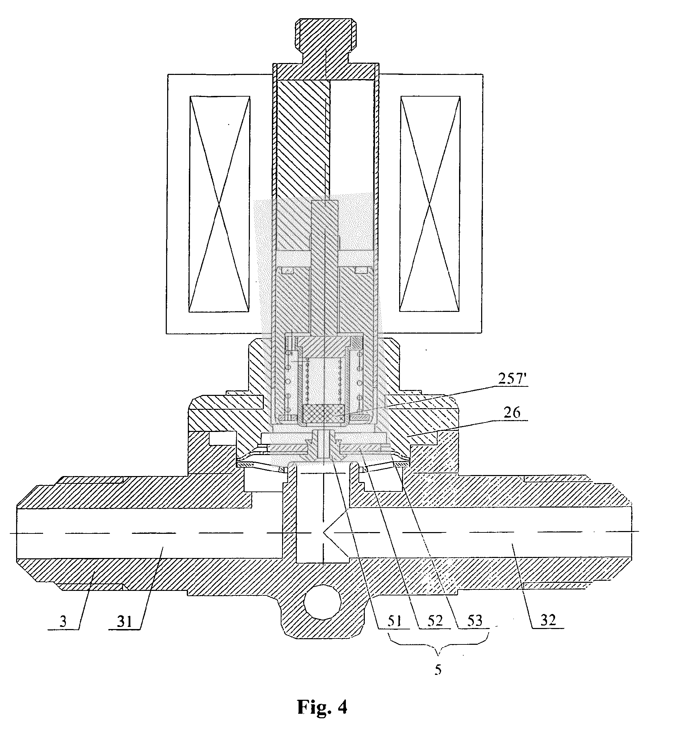

In such a state, when there is no pressure difference between two ends of the solenoid valve, the diaphragm component 5 contacts with the valve port under its own weight, thus the solenoid valve is in a closed state. When gas/liquid is introduced from the inlet 31 of the solenoid valve, the pressure at the inlet 31 is higher than the pressure at the outlet 32, i.e., higher than the pressure in the chamber above the diaphragm component communicated with the outlet 32. Thus, a pressure difference is formed between the upper and lower sides of the diaphragm component 5. The diaphragm component 5 is moved upwardly under the pressure difference and is stopped by the stop plate 52 and the valve seat 26. Thus, the seal component and the pilot valve port 51a of the pilot valve spool 51 are in a separated state and the valve port is in an open state. For details please refer to Fig. 4, which shows a schematic view of the solenoid valve when being de-energized under a pressure difference.

To decrease the impact force generated when the diaphragm is opened and closed and prolong the life span thereof, the diaphragm is provided with a diaphragm balance hole 53a which has a diameter smaller than that of the pilot valve port 51a of the pilot valve spool 51.

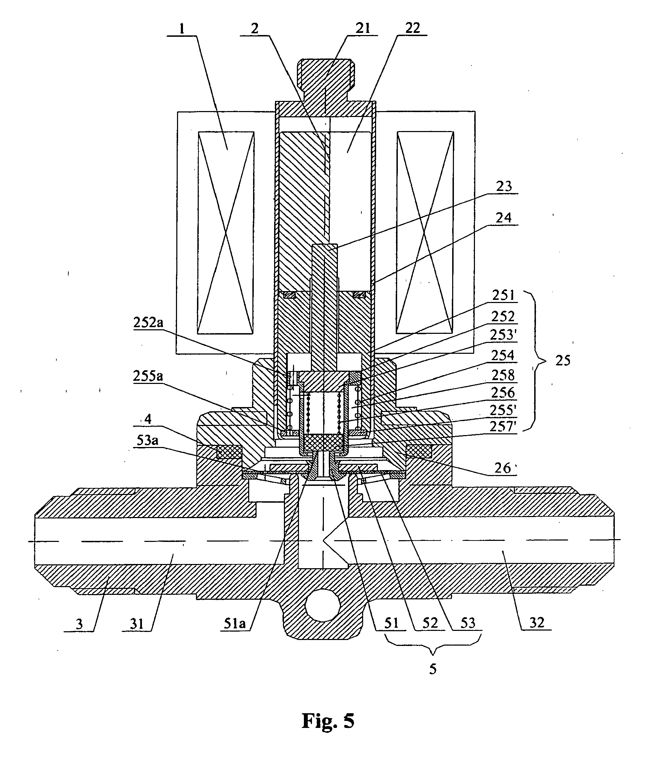

Second, when the solenoid coil component 1 is energized, the electromagnetic force is greater than the spring force of the return spring 254. Under the electromagnetic force, the movable iron core component 22 is moved towards the fixed iron core component 251 and sequentially drives the transmission rod 23, the transmission seat 253', the transmission sleeve 252 which are the transmission parts, and the seal component together to move towards the pilot valve port 51a of the pilot valve spool 51, until the seal component contacts with the pilot valve port 51a of the pilot valve spool 51. At this time, by the diaphragm balance hole 53a provided in the diaphragm component 53, the pressure at the upper and lower sides of the diaphragm component 53 tends to be balanced. The diaphragm component 53 is moved downwardly to close the valve port under the electromagnetic force of the movable iron core component 22 and the fixed iron core component 251. At the beginning, the displacement of the seal component is equal to that of the movable iron core component 22 until the sealing surface of the seal component comes into contact with the pilot valve port 51a of the pilot valve spool 51. Then the movable iron core component 22 continues to move for a certain distance, e.g., from 0.1 to 1mm, while the seal component is stopped by abutting against the pilot valve port 51a of the pilot valve spool 51. Thus the seal spring 256 is compressed, and the spring force of the seal spring maintains the contact between the seal component (257, 257') and the pilot valve port 51a of the pilot valve spool 51 so as to achieve seal. At this moment, a gap exists between the bottom surface of the seal component (257, 257') and the third positioning surface 252f of the transmission sleeve 252. For details please refer to Fig. 5, which shows a schematic view of the solenoid valve when being energized.

Third, when the solenoid valve is switched from being energized to being de-energized, the electromagnetic force between the movable iron core component 22 and the fixed iron core component disappears, and the movable iron core component 22 is moved away from the fixed iron core component under the spring force of the return spring 254. At the beginning, the seal component (257, 257') does not move until the bottom surface of the seal component (257, 257') comes into contact with the third positioning surface 252f of the transmission sleeve 252 after the movable iron core component 22 moves for a certain distance. Then, the transmission sleeve 252 drives the seal component (257, 257') to move upwardly. At this moment, the spring force of the return spring 254 overcomes the force generated by the pressure difference at the pilot valve port 51a of the pilot valve spool 51, thereby opening the pilot valve port 51a of the pilot valve spool 51. In this way, the pressure at the upper side of the diaphragm component 5 is decreased, thus a pressure difference is formed between the upper and lower sides of the diaphragm component 5. Under the pressure difference, the diaphragm component 5 is moved upwardly, thereby opening the valve port of the lower valve body 3. If there is no pressure difference between the two ends of the solenoid valve or the pressure difference is smaller than 0.005Ma, the diaphragm component contacts with the valve port under its own weight, so that the solenoid valve is in a closed state. If gas/liquid is introduced from the inlet 31 of the solenoid valve, the pressure at the inlet 31 is higher than the pressure at the outlet 32, i.e., higher than the pressure in the chamber above the diaphragm component 5 communicated with the outlet 32. Thus, a pressure difference is formed between the upper and lower sides of the diaphragm component 5. When the force generated by this pressure difference is equal or greater than the own weight of the diaphragm component, the diaphragm component 5 is moved upwardly and stopped by the stop plate 52 and the valve seat 26. At this moment, the seal component 257 and the pilot valve port 51a of the pilot valve spool 51 are in a separated state and the main valve port is in an open state. Thus the solenoid valve may be normally open and closed when being energized.

When assembling the solenoid valve, the main steps are as follows:
i) assembling the fixed iron core assembly includes machining or assembling the fixed iron core component 251; installing the transmission sleeve 252 fitted with the transmission seat 253, the seal spring 256, and the seal component 257 into the fixed iron core component 251; installing the return spring 254 and a guiding sleeve 255; then pressing the thin wall portion 251c at the bottom of the fixed iron core component 251 so as to fix the guiding sleeve 255 to the fixed iron core component 251;
ii) welding the valve seat 26 and the sleeve 24;
iii) pressing the fixed iron core assembly 25 into the sleeve 24 and fixedly positioning the fixed iron core assembly 25 by resistance welding, or inserting the fixed iron core assembly 25 into the sleeve 24 and pressing the outside of the sleeve 24 to position them and then welding; and
iv) installing the transmission rod, the movable iron core component 22 and the plug 21 in sequence into a chamber defined by the sleeve 24 and the fixed iron core assembly,
wherein the plug 21 and sleeve 24 are hermetically fixed together by argon welding to form a valve body component.

In the assembly, the plug 21 is pressed into a port of the sleeve 24 and fixed to the sleeve 24 by welding. The initial state of the sleeve 24 is limited by the plug 21, so that the seal component within the fixed iron core component is driven and pushed by the movable iron core component to generate a displacement of 0.05 to 1 mm. The seal component is separated from the fixed iron core component at the engagement portion therebetween, thereby forming a fluid pressure balancing passage. Meanwhile, in turn, a spring return force is applied on the movable iron core component and the plug by means of the seal component. More preferably, the seal component within the fixed iron core component is driven and pushed by the movable iron core component to generate a displacement of 0.15 to 0.50 mm.

However, the step 1 and step 2 in the above steps may be performed simultaneously, or the step 2 may be performed in advance.

The guiding sleeve provided in the fixed iron core component effectively prevents the radial deviation of the sealing component, which is beneficial to improve the reliability of a production. Moreover, the integrated fixed iron core assembly can meet different requirements on flowrate to become a universal component, which is convenient for management.

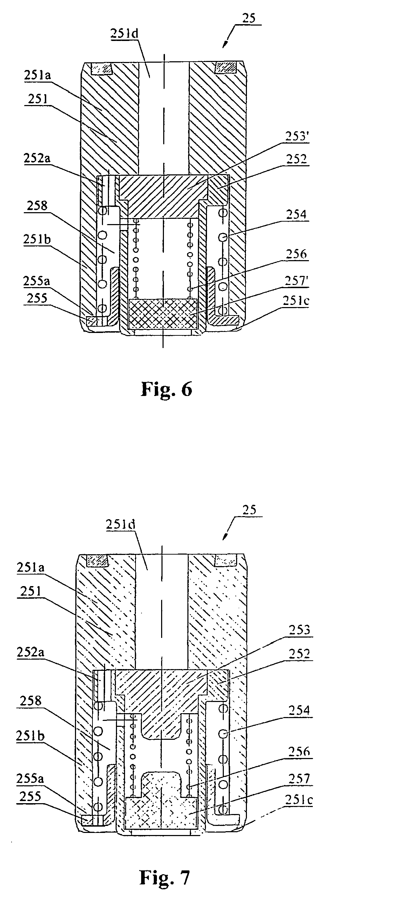

With reference to Fig. 6, a schematic view of a fixed iron core component according to a second example is shown.

As shown in Fig. 6, this example differs from the first in that: to ensure the transmission sleeve 252 have a good guiding performance during a movement, a guiding fixed component 255 having a cylindrical shape is used to replace the fixed component in the first example. In this way, when the solenoid valve is operated, the guiding performance of the transmission sleeve is reliable and the operation of the solenoid valve is more smooth and reliable.

Specially, it should be noted that the elastic component disposed between the transmission seat and the seal component is not limited to the seal spring, and may be a rubber component and other elastic components which have relative good elasticity.

In order that the seal spring provided between the transmission seat and the seal component is fixed reliably and steadily in the above-mentioned first and second example, a projection for positioning the seal spring may be disposed on the side of the transmission seat or the seal component facing the seal spring. In this way, the seal spring 256 will not sideslip or deflect, thus the seal component and the valve port can be sealed reliably and steadily. Also, the projection(s) may be disposed on at least one of the transmission seat and the seal component.

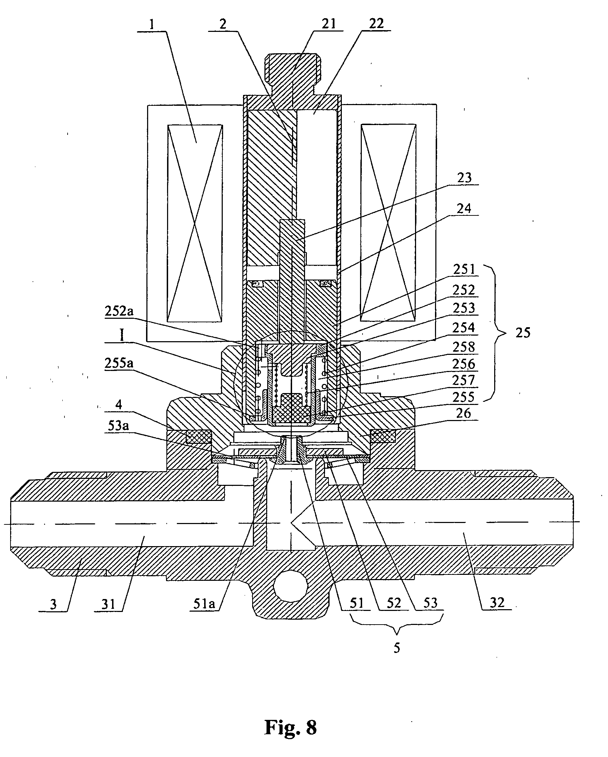

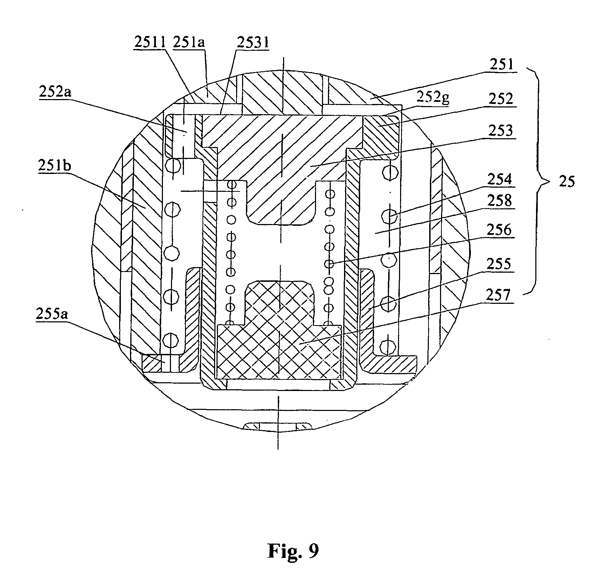

With reference to Figs. 7, 8 and 9, Fig. 7 is a schematic view of the fixed iron core assembly according to a third example, Fig. 8 is a schematic view of the normally open solenoid valve according to the third example in which the projections for positioning the seal spring are disposed on both of the transmission seat 253 and the seal component. Fig. 9 is an enlarged view of I portion in Fig. 8.

Specifically, a schematic view of the solenoid valve when being de-energized without the pressure difference is shown in Fig. 8. As shown in Fig. 8, the length of the transmission rob 23 is larger than the sum of a depth of a hole of the movable iron core component 22 which receives the transmission rob and the travel distance of the movable iron core component 22. In this way, in the case that the solenoid valve is de-energized and has no pressure difference, the transmission sleeve 252 and the transmission seat 253 are not directly in contact with the positioning surface 2511 at the bottom of the receiving chamber 258 of the fixed iron core component because the transmission rob abuts against the transmission sleeve 252 and the transmission seat 253. In this way, during the operation of the solenoid valve, an upper planar surface 252g of the transmission sleeve 252 and an upper planar surface 2531 of the transmission seat 253 are not directly impact on the positioning surface 2511 at the bottom of the receiving chamber 258 of the fixed iron core component 251. Thus, it is possible to avoid the problem that the upper planar surface 252g of the transmission sleeve 252 and the upper planar surface 2531 of the transmission seat 253 are deformed due to the direct impact therebetween. In addition, the fact that the upper planar surface 252g of the transmission sleeve 252 and the upper planar surface 2531 of the transmission seat 253 are not directly in contact with the positioning surface 2511 at the bottom of the receiving chamber 258 of the fixed iron core component 251 may also ensure the pressure balance inside the solenoid valve, i.e., the pressure of gas/liquid or two-phase fluid inside may pass through the balance hole 255a of the guiding fixed component 255 such that the pressures inside and outside of the receiving chamber 258 of the fixed iron core assembly can be balanced. It is also possible to ensure the pressure balance between the upper side and the lower side of the fixed iron core assembly, through the lateral or longitudinal balance holes disposed in the transmission sleeve 252 and the gap between the upper planar surface 252g of the transmission sleeve 252, the upper planar surface 2531 of the transmission seat 253 and the positioning surface 2511 at the bottom of the receiving chamber 258 of the fixed iron core component 251. Accordingly, a pressure balance inside the entire solenoid valve could be achieved, thereby improving the operation reliability and the life span. Preferably, the gap between the upper planar surface 252g of the transmission sleeve 252, the upper planar surface 2531 of the transmission seat 253 and the positioning surface 2511 at the bottom of the receiving chamber 258 of the fixed iron core component 251 may be ranged from 0.05mm to 1mm. More preferably, the gap between the upper planar surface 252g of the transmission sleeve 252, the upper planar surface 2531 of the transmission seat 253 and the positioning surface 2511 at the bottom of the receiving chamber 258 of the fixed iron core component 251 may be ranged from 0.15mm to 0.7mm. Moreover, the upper planar surface 252g of the transmission sleeve 252 and the upper planar surface 2531 of the transmission seat 253 are not necessarily flushed with each other, and may have a height difference, for example, about 0.25 mm or less.

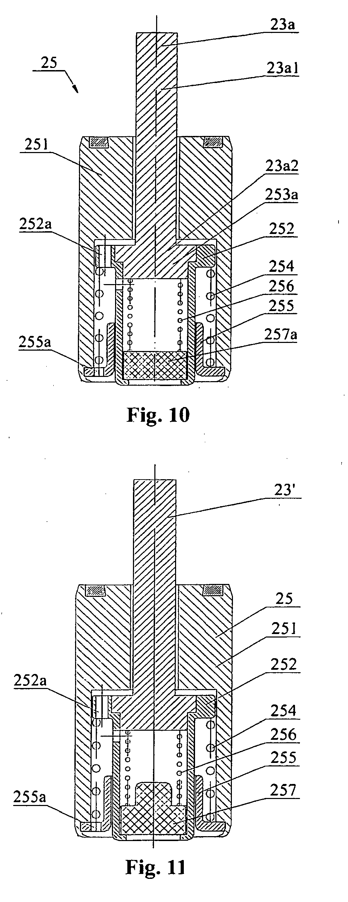

With reference to Fig. 10, a schematic view of the fixed iron core assembly according to a fourth example is shown.

As shown in Fig. 10, this example is an improvement based on the second example, this example differs from the second example mainly in that, in this example, the fixed iron core assembly further includes a transmission rod which is integrated with the transmission seat to form the transmission component 23a. In this way, the number of the components may be reduced. The transmission component 23a includes two portions, i.e. an upper portion 23a1 partially protruding out of the through hole of the fixed iron core component and a lower portion 23a2 fitted in the fixed iron core component. The length of the upper portion 23a1 is larger than the sum of a length of the through hole in the upper portion of the fixed iron core component and the travel distance of the movable iron core component. The transmission component 23a may be axially movably disposed on the fixed iron core component 251. When assembling, the transmission component 23a is firstly installed on the fixed iron core component 251, and the transmission sleeve provided with the seal spring or other elastic component and the seal component, the return spring 254 and the guiding fixed component 255 are installed in sequence, and then, the end portion at bottom of the fixed iron core component is pressed so as to be fixed to the guiding fixed component 255. Other assembling processes, configurations, operating principle and operating mode are the same as that of the examples described above and thus will be omitted herein.

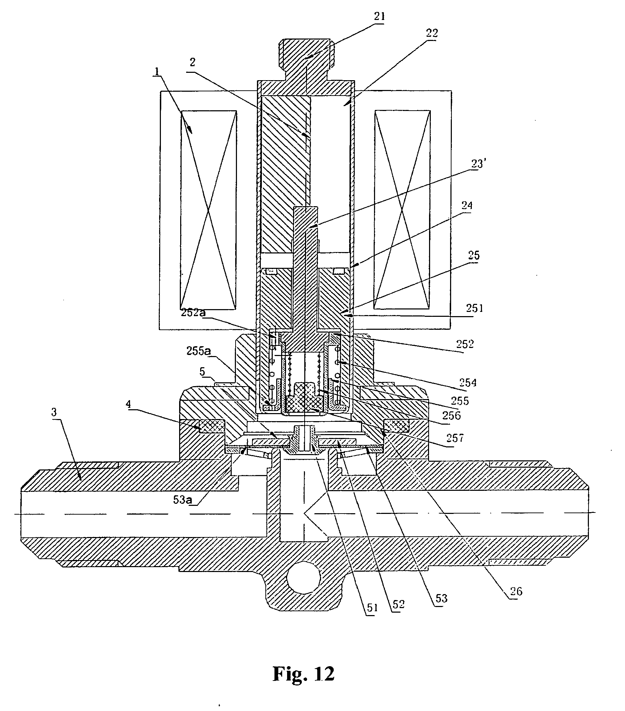

With reference to Figs. 11 and 12, Fig. 11 is a schematic view of the fixed iron core assembly according to a fifth example, and Fig. 12 is a schematic view of the normally open solenoid valve according to the fifth example.

As shown in Figs. 11 and 12, this example differs from the fourth example mainly in that the seal component is provided with a projection for positioning the seal spring.

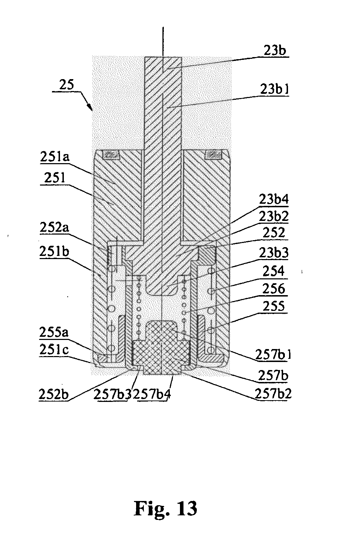

With reference to Fig. 13, a schematic view of the fixed iron core assembly according to a sixth example is shown.

As shown in Fig. 13, the fixed iron core assembly includes a fixed iron core component 251. The upper end portion 251a of the fixed iron core component 251adjacent to the movable iron core component is provided with a through hole 251d, and a lower end portion 251b of the fixed iron core component 251 far from the movable iron core component is provided with a receiving chamber 258. The inner diameter of the receiving chamber 258 is larger than that of the through hole 251d, thereby forming a positioning surface 2511. The lowest end of the fixed iron core component 251 is a thin wall portion 251c. A guiding fixed component 255 is fixed in the receiving chamber 258. The guiding fixed component 255 and the fixed iron core component 251 are fixed by pressing and deforming the end of the thin wall portion 251c of the fixed iron core component 251. Also, in this example, a transmission sleeve 252 is further provided in the receiving chamber 258. The transmission sleeve 252 is located in the receiving chamber 258, and the seal component 257b can be axially movably fixed in the transmission sleeve 252. The upper end of the seal component 257b is further provided with a positioning portion 257b1 for positioning the seal spring 256. The positioning portion 257b1 is located in the receiving chamber. Moreover, the seal component 257b is also provided with a seal portion 257b2 protruding out of the transmission sleeve 252. The seal portion 257b2 also protrudes out of the fixed iron core component 251. In this way, the surface 257b4 of the seal portion 257b2 is the seal surface between the seal component and the valve port of the pilot valve spool, instead of the whole bottom surface of the seal component in the above examples, which is advantageous in machining the seal surface, and provides more reliable seal. Also, a protruding height of the seal portion 257b2 is larger than a movement distance of the seal component 257b relative to the transmission sleeve 252 during movement. Also, the seal portion 257b2 protruding outwardly forms a step portion 257b3 for positioning the seal component 257b by abutting against the third positioning surface 252f of the transmission sleeve 252. In this way, the seal component may be moved axially and disposed reliably in the transmission sleeve 252, that is, the seal component may be moved axially and disposed reliably in the fixed iron core component251.

Furthermore, a return spring 254 is provided between the transmission sleeve 252 and the guiding fixed component 255. In this way, when the solenoid valve is energized, the upper end portion of the fixed iron core component 251, the movable iron core component 22 and the solenoid coil component 1 outside the sleeve form a magnetic circuit. Since the return spring 254 located in the receiving chamber 258 at the lower end portion of the fixed iron core component 251 is not included in the magnetic circuit, electromagnetic attractive force of the solenoid valve may be increased, and the stability of the return spring can be improved. Moreover, the transmission parts for transmission in this example include a transmission component 23b and a transmission sleeve 252. The transmission component 23b includes an upper portion 23b1 partially protruding out of the through hole 251d of the fixed iron core component 251, a lower portion 23b2 fitted in the fixed iron core component and a positioning portion 23b3 for positioning the seal spring 256. The length of the upper portion 23b1 is larger than the sum of a depth of the through hole 251d in the upper portion of the fixed iron core component and the travel distance of the movable iron core component. The transmission component 23b may be axially movably disposed on the fixed iron core component 251. When the solenoid valve is de-energized, the positioning surface 2511 at the bottom of the receiving chamber 258 of the fixed iron core component 251 does not directly contact with a step surface 23b4 of the transmission component 23b. The transmission component 23b and the transmission sleeve 252 together form transmission parts of the solenoid valve. When operating, the movable iron core component drives the transmission component, and further drives the transmission sleeve, and then drives the seal component to move, so as to close the solenoid valve. When assembling, the transmission component 23b is firstly installed on the fixed iron core component 251, and the seal spring, the seal component, the transmission sleeve, the return spring 254 and the guiding fixed component 255 are installed in sequence, and then the end portion at bottom of the fixed iron core component is pressed so as to be fixed to the guiding fixed component 255. Other assembling processes, configurations, operating principle and operating mode are the same as that of the first example described above and thus will be omitted herein.

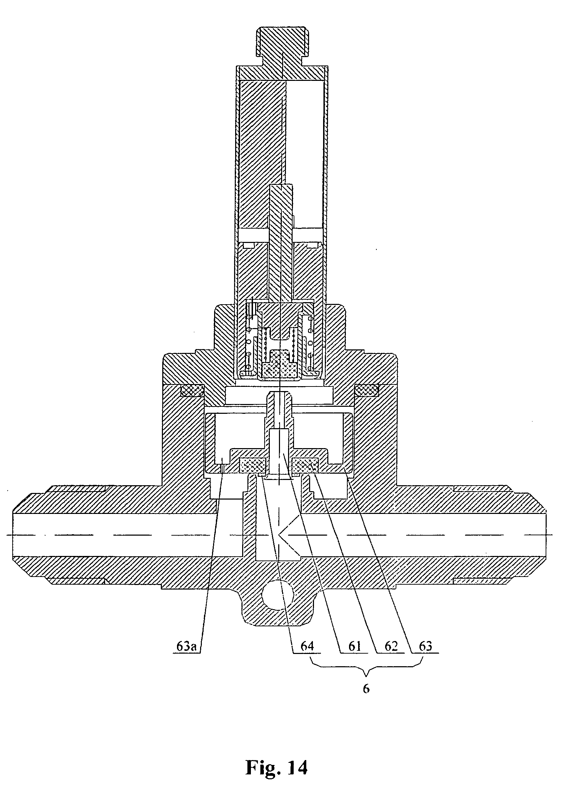

With reference to Fig. 14, a schematic view of the normally open solenoid valve according to a seventh example is shown.

As shown in Fig. 14, this example differs from the above-mentioned third example mainly in that, in the example, a piston component 6 is used to open/close the main valve, rather than diaphragm component. The piston component 6 includes an axially movable piston member 63, a main seal member 62 contacting with the valve port of the lower valve body to close the valve, and a fixed member 64. A valve port 61 hermetically contacting with the seal component is disposed in the piston member 63. In this example, if desired, a balance hole 63a may be disposed in the piston component. The operating principle and operating mode of this example are the same as that of the third example, and thus will be omitted herein.

In the examples described above, the solenoid valves are pilot valves. However, the present invention is not limited thereto. In the case that the required flowrate for the solenoid valve is relatively small, it is unnecessary to adopt a pilot solenoid valve, and a directly open/closed solenoid valve may be applicable, in which the seal component of the solenoid valve is operated to open/close the main valve port of the solenoid valve directly. The corresponding operating principle and operating mode thereof are simpler, and thus will not be described therein.

The above description only describes the preferable examples. It should be noted that many improvements and modifications may be made by those skilled in the art without departing from the principle of this invention. These improvements and modifications should be deemed to fall into the protection scope of this invention as defined by the appended claims.

## Claims

1. A normally open solenoid valve, comprising a valve body component (2) and a coil component (1), wherein a fixed iron core assembly (25), a movable iron core component (22) being axially movable under an electromagnetic force and a seal component (257') are disposed in a sleeve (24) of the valve body component (2), the seal component (257') abuts against or is separated from a valve port (51a) so as to open or close the solenoid valve,
wherein the fixed iron core assembly (25) comprises a fixed iron core component (251) and a transmission component (252) being axially slidable relative to the fixed iron core component (251), the seal component (257') is disposed at a lower end of the transmission component (252), and an upper end of the transmission component directly or indirectly contacts with the movable iron core component (22), thereby driving the seal component (257') to abut against or be separated from the valve port (51a), wherein the seal component (257') is axially movable relative to the lower end of the transmission component (252), and an elastic component (256) is provided between the seal component (257') and the transmission component (252), and wherein the transmission component includes a transmission sleeve (252), and a stop fixed component (255') is fixedly provided at the lower end of the fixed iron core component (251), and
wherein an outer circumferential surface of the transmission sleeve (252) is of a step shape in which an upper portion of the step shape is large while a lower portion thereof is small, the transmission sleeve (252) is provided in a receiving chamber (258) of the fixed iron core component (251), a small diameter lower portion of the transmission sleeve (252) is inserted into a through hole of the stop fixed component (255'), a return spring (254) is provided between a step surface of the transmission sleeve (252) and the stop fixed component (255'), and the seal component (257') is provided in the lower portion the transmission sleeve (252).

2. The normally open solenoid valve according to claim 1, wherein the return spring (254) is provided between the fixed iron core component (251) and the transmission component (252).

3. The normally open solenoid valve according to claim 1, wherein the elastic component is a seal spring (256), and a spring force of the seal spring (256) is smaller than that of the return spring (254) when the solenoid valve is energized to close.

4. The normally open solenoid valve according to claim 3, wherein the spring force of the seal spring (256) is between 1/10 and 1/3 of the spring force of the return spring (254) when the solenoid valve is energized to close.

5. The normally open solenoid valve according to claim 1, wherein the transmission component further comprises a transmission seat (253') and a transmission rod (23), the transmission seat (253') abuts against the transmission sleeve (252) and is disposed in an upper end portion of the transmission sleeve (252), an upper end portion of the transmission rod (23) contacts with the movable iron core component (22) and a lower end portion of the transmission rod (23) abuts against an upper end portion of the transmission seat (253') through a through hole of the fixed iron core component (251), and the elastic component (256) is provided between the transmission seat (253') and the seal component (257').

6. The normally open solenoid valve according to claim 5, wherein an inner circumferential surface of the transmission sleeve (252) is of a step shape in which an upper portion of the step shape is large while a lower portion thereof is small, the transmission seat (253') is of a step shape in which an upper portion of the step shape is large while a lower portion thereof is small, the transmission seat (253') is wholly or partially provided in a chamber of the transmission sleeve (252), and a bottom surface of a large diameter upper portion of the transmission seat (253') abuts against a step surface of the chamber of the transmission sleeve (252).

7. The normally open solenoid valve according to claims 5 or 6, wherein the transmission rod (23) and the transmission seat (253') are integrated as a single piece.

8. The normally open solenoid valve according to claims 5 or 6, wherein there are gaps between an upper surface of the transmission seat (253'), an upper surface of the transmission sleeve (252) and a positioning surface at the bottom of the receiving chamber (258) of the fixed iron core component (251), respectively, when the solenoid valve is de-energized.

9. The normally open solenoid valve according to claim 8, wherein the gaps are ranged from 0.05mm to 1mm.

10. The normally open solenoid valve according to claims 1 or 2, wherein the valve port is a pilot valve port of a diaphragm component.

11. An assembling method for the normally open solenoid valve according to claim 1 comprising the steps of
assembling the seal component (257') and the fixed iron core component (251) to form the fixed iron core assembly (25);
fitting and fixing the fixed iron core assembly (25) and the sleeve (7) together; assembling the movable iron core component (22) until forming the valve body component (2); and
assembling the valve body component (2) and the coil component (1) together.

## Patentansprüche

1. Normal geöffnetes Magnetventil mit einem Ventilkörperelement (2) und einem Spulenelement (1), wobei eine feststehende Eisenkernanordnung (25), eine bewegbare Eisenkernanordnung (22), die unter elektromagnetischer Kraft axial bewegbar ist, und ein Dichtungselement (257') in einer Hülse (24) des Ventilkörperelements (2) angeordnet sind, wobei das Dichtungselement (257') an einem Ventilport (51a) anliegt oder von diesem getrennt ist, um das Magnetventil zu öffnen oder zu schließen, wobei das Dichtungselement (257') in Bezug auf das untere Ende des Übertragungselements (252) axial bewegbar ist, und ein elastisches Element (256) zwischen dem Dichtungselement (257') und dem Übertragungselement (252) vorgesehen ist, und wobei das Übertragungselement eine Übertragungshülse (252) aufweist, und ein Festanschlagelement (255') fest an dem unteren Ende des feststehenden Eisenkernelements (251) vorgesehen ist, und
wobei die Außenumfangsfläche der Übertragungshülse (252) stufenförmig ausgebildet ist, wobei ein oberer Bereich der Stufenform groß ist, während ein unterer Bereich derselben klein ist, wobei die Übertragungshülse (252) in einer Aufnahmekammer (258) des feststehenden Eisenkernelements (251) vorgesehen ist, wobei ein einen kleinen Durchmesser aufweisender unterer Bereich der Übertragungshülse (252) in ein Durchgangsloch des Festanschlagelements (255') eingesetzt ist, wobei die Rückstellfeder (254) zwischen einer Anschlagfläche der Übertragungshülse (252) und dem Festanschlagelement (255') vorgesehen ist, und wobei das Dichtungselement (257') im unteren Bereich der Übertragungshülse (252) angeordnet ist.

2. Normal geöffnetes Magnetventil nach Anspruch 1, bei welchem eine Rückstellfeder (254) zwischen dem feststehenden Eisenkernelement (251) und dem Übertragungselement (252) vorgesehen ist.

3. Normal geöffnetes Magnetventil nach Anspruch 1, bei welchem das elastische Element eine Dichtungsfeder (256) ist und die Federkraft der Dichtungsfeder (256) bei zum Schließen mit Energie beaufschlagtem Magnetventil geringer als diejenige der Rückstellfeder (234) ist.

4. Normal geöffnetes Magnetventil nach Anspruch 3, bei welchem die Federkraft der Dichtungsfeder (256) bei zum Schließen mit Energie beaufschlagtem Magnetventil zwischen 1/10 und 1/3 der Federkraft der Rückstellfeder (254) beträgt.

5. Normal geöffnetes Magnetventil nach Anspruch 1, bei welchem das Übertragungselement ferner einen Übertragungssitz (253') und eine Übertragungsstange (23) aufweist, wobei der Übertragungssitz (253') an der Übertragungshülse (252) anliegt und in einem oberen Endbereich der Übertragungshülse (252) angeordnet ist, wobei der obere Endbereich der Übertragungsstange (23) das bewegbare Eisenkernelement (22) berührt und der untere Endbereich der Übertragungsstange (23) an dem oberen Endbereich des Übertragungssitzes (253') durch ein Durchgangsloch des feststehenden Eisenkernelements (251) hindurch anliegt, und wobei das elastische Element (256) zwischen dem Übertragungssitz (253') und dem Dichtungselement (257') vorgesehen ist.

6. Normal geöffnetes Magnetventil nach Anspruch 5, bei welchem die Innenumfangsfläche der Übertragungshülse (252) stufenförmig ausgebildet ist, wobei ein oberer Bereich der Stufenform groß ist, während ein unterer Bereich derselben klein ist, wobei der Übertragungssitz (253') stufenförmig ausgebildet ist, wobei ein oberer Bereich der Stufenform groß ist, während ein unterer Bereich derselben klein ist, wobei der Übertragungssitz (253') vollständig oder teilweise in einer Kammer der Übertragungshülse (252) vorgesehen ist, und die Unterseite des einen großen Durchmesser aufweisenden oberen Bereichs des Übertragungssitzes (253') an einer Stufenfläche der Kammer der Übertragungshülse (252) anliegt.

7. Normal geöffnetes Magnetventil nach den Ansprüchen 5 oder 6, bei welchem die Übertragungsstange (23) und der Übertragungssitz (253') zu einem einzigen Teil zusammengefasst sind.

8. Normal geöffnetes Magnetventil nach den Ansprüchen 5 oder 6, bei welchem im energielosen Zustand des Magnetventils Spalte jeweils zwischen der Oberseite des Übertragungssitzes (253'), der Oberseite der Übertragungshülse (252) und einer Positionierungsfläche am unteren Ende der Aufnahmekammer (258) des feststehenden Eisenkernelements (251) bestehen.

9. Normal geöffnetes Magnetventil nach Anspruch 8, bei welchem die Spalte eine Größe im Bereich zwischen 0,5 mm und 1 mm aufweisen.

10. Normal geöffnetes Magnetventil nach den Ansprüchen 1 oder 2, bei welchem der Ventilport ein Steuerventilport eines Membranelements ist.

11. Montageverfahren für das normal geöffnete Magnetventil nach Anspruch 1, mit den folgenden Schritten:
Montieren des Dichtungselements (257') und des feststehenden Eisenkernelements (251), um die feststehende Eisenkernanordnung (25) zu bilden;
Zusammenfügen und Befestigen der feststehenden Eisenkernanordnung (25) und der Hülse (7);
Montieren des bewegbaren Eisenkernelements (22) bis zur Bildung des Ventilkörperelements (2); und
Montieren des Ventilkörperelements (2) und des Spulenelements (1).

## Revendications

1. Electrovanne normalement ouverte, comprenant un composant corps de vanne (2) et un composant bobine (1), dans laquelle un ensemble noyau de fer fixe (25), un composant noyau de fer mobile (22) étant axialement mobile sous une force électromagnétique et un composant formant joint (257') sont disposés dans un manchon (24) du composant corps de vanne (2), le composant formant joint (257') vient en butée contre ou est séparé d'une lumière de vanne (51a) de façon à ouvrir ou fermer l'électrovanne, dans laquelle le composant formant joint (257') est axialement mobile par rapport à l'extrémité inférieure du composant de transmission (252), et un composant élastique (256) est prévu entre le composant formant joint (257') et le composant de transmission (252), et dans laquelle le composant de transmission inclut un manchon de transmission (252), et un composant fixe d'arrêt (255') est fixement disposé à l'extrémité inférieure du composant noyau de fer fixe (251), et
dans laquelle une surface circonférentielle externe du manchon de transmission (252) est en forme de marche dans laquelle une portion supérieure de la forme de marche est plus grande alors qu'une portion inférieure de celle-ci est plus petite, le manchon de transmission (252) est disposé dans une chambre de réception (258) du composant noyau de fer fixe (251), une portion inférieure de petit diamètre du manchon de transmission (252) est insérée dans un trou traversant du composant fixe d'arrêt (255'), le ressort de rappel (254) est disposé entre une surface de marche du manchon de transmission (252) et le composant fixe d'arrêt (255'), et le composant formant joint (257') est disposé dans la portion inférieure du manchon de transmission (252).

2. Electrovanne normalement ouverte selon la revendication 1, dans laquelle un ressort de rappel (254) est prévu entre le composant noyau de fer fixe (251) et le composant de transmission (252).

3. Electrovanne normalement ouverte selon la revendication 1, dans laquelle le composant élastique est un ressort formant joint (256), et une force de rappel du ressort formant joint (256) est plus petite que celle du ressort de rappel (254) lorsque l'électrovanne est alimentée en énergie pour se fermer.

4. Electrovanne normalement ouverte selon la revendication 3, dans laquelle la force de rappel du ressort formant joint (256) est comprise entre 1/10 et 1/3 de la force de rappel du ressort de rappel (254) lorsque l'électrovanne est alimentée en énergie pour se fermer.

5. Electrovanne normalement ouverte selon la revendication 1, dans laquelle le composant de transmission comprend en outre un siège de transmission (253') et une tige de transmission (23), le siège de transmission (253') vient en butée contre le manchon de transmission (252) et est disposé dans une portion d'extrémité supérieure du manchon de transmission (252), une portion d'extrémité supérieure de la tige de transmission (23) vient en contact avec le composant noyau de fer mobile (22) et une portion d'extrémité inférieure de la tige de transmission (23) vient en butée contre une portion d'extrémité supérieure du siège de transmission (253') à travers un trou traversant du composant noyau de fer fixe (251), et le composant élastique (256) est disposé entre le siège de transmission (253') et le composant formant joint (257').

6. Electrovanne normalement ouverte selon la revendication 5, dans laquelle une surface circonférentielle interne du manchon de transmission (252) est en forme de marche dans laquelle une portion supérieure de la forme de marche est grande alors qu'une portion inférieure de celle-ci est petite, le siège de transmission (253') est en forme de marche dans laquelle une portion supérieure de la forme de marche est grande alors qu'une portion inférieure de celle-ci est petite, le siège de transmission (253') est totalement ou partiellement disposé dans une chambre du manchon de transmission (252), et une surface inférieure d'une portion supérieure de grand diamètre du siège de transmission (253') vient en butée contre une surface de marche de la chambre du manchon de transmission (252).

7. Electrovanne normalement ouverte selon les revendications 5 ou 6, dans laquelle la tige de transmission (23) et le siège de transmission (253') sont intégrés sous forme d'une seule pièce.

8. Electrovanne normalement ouverte selon les revendications 5 ou 6, dans laquelle il existe des espaces entre une surface supérieure du siège de transmission (253'), une surface supérieure du manchon de transmission (252) et une surface de positionnement au fond de la chambre de réception (258) du composant noyau de fer fixe (251), respectivement, lorsque l'électrovanne n'est plus alimentée en énergie.

9. Electrovanne normalement ouverte selon la revendication 8, dans laquelle les espaces varient de 0,05 mm à 1 mm.

10. Electrovanne normalement ouverte selon les revendications 1 ou 2, dans laquelle la lumière de vanne est une lumière de vanne pilote d'un composant de diaphragme.

11. Procédé d'assemblage de l'électrovanne normalement ouverte selon la revendication 1, comprenant les étapes consistant à
assembler le composant formant joint (257') et le composant noyau de fer fixe (251) pour former l'ensemble noyau de fer fixe (25) ;
ajuster et fixer l'ensemble noyau de fer fixe (25) et le manchon (7) ensemble ;
assembler le composant noyau de fer mobile (22) jusqu'à former le composant corps de vanne (2) ; et
assembler le composant corps de vanne (2) et le composant bobine (1) ensemble.
